# EUROPÄISCHE PATENTSCHRIFT

(11) **EP 2 248 639 B1**
(45) Veröffentlichungstag und Bekanntmachung des Hinweises auf die Patenterteilung: **28.03.2012**
(21) Anmeldenummer: 10171117.4
(22) Anmeldetag: 19.11.2008
(51) Int. Cl.: B26D 1/30

(54) **Schneid- und Stanzvorrichtung**
Device for cutting and punching
Machine de découpage et poinçonnage

(30) Priorität: 22.11.2007 DE 102007056348
(43) Veröffentlichungstag der Anmeldung: 10.11.2010
(62) Teilanmeldung aus: 08169445.7
(73) Patentinhaber: Krones AG, 93073 Neutraubling (DE)
(72) Erfinder: Ederer, Roland, 93086, Wörth/Donau (DE)
(74) Vertreter: Bittner, Bernhard

(56) Entgegenhaltungen:
- DE-C- 180 492
- GB-A- 1 068 915
- US-A- 43 458
- US-A- 2 518 076
- US-B1- 6 644 160

## Beschreibung

Die vorliegende Erfindung, betrifft eine Präparierungseinheit, deren Verwendung bezieht sich auf eine Vorrichtung und ein Verfahren zum Verbinden von Kunststoffschläuchen und insbesondere von solchen Kunststoffschläuchen, die zum Etikettieren von Behältnissen verwendet werden. Aus dem Stand der Technik ist es bekannt, dass zum Etikettieren bestimmter Kunststoffbehältnisse Kunststoffschläuche über die Behältnisse gezogen und dann an die Behältnisse angeschrumpft werden. Dabei werden derartige Kunststoffschläuche üblicherweise von Rollen abgewickelt und in einem kontinuierlichen Verfahren über die Behältnisse gezogen. Nachdem eine Rolle verbraucht ist, wird üblicherweise im laufenden Betrieb der Endabschnitt dieser ersten Rolle mit einem Anfangsabschnitt einer nächsten Rolle verbunden und anschließend die weitere Rolle abgerollt. Um den eigentlichen Verbindungsvorgang, der dabei von Hand vorgenommen wird, zu überbrücken, sind Pufferanordnungen vorhanden, welche während des Verbindungsvorganges Material zum Etikettieren der Behältnisse bereitstellen.

Dabei ist es im Stand der Technik erforderlich, dass das Bedienungspersonal nach dem Ende jeder Rolle manuell den Endabschnitt der verbrauchten Rolle mit einem Anfangsabschnitt an einer neuen Rolle verbindet.

Aus der DE 601 03 112 T2 ist ein Verfahren zum Verbinden des Endes eines abgeflachten Rohrs aus Kunststofffolie mit dem Anfang eines anschließenden Rohrs bekannt. Dabei wird der Vorderrand des Anfangs des abgeflachten Rohrs mit einer schräg abgeschnittenen Ecke an beiden longitudinalen Rändern versehen und auf diese Weise das Zusammenführen mit dem jeweiligen anderen Anfangsabschnitt erleichtert. Dabei ist es jedoch stets erforderlich, die beiden Ecken abzuschrägen und dieser Vorgang muss mit sehr hoher Genauigkeit ausgeführt werden, da sonst die zu verbindenden Abschnitte schräg gegeneinander versetzt sind. Auch kann es zu einem Verkanten der Endabschnitte während des Verbindungsvorgangs kommen.

In der US 434 58 A, das der die Merkmale des Oberbegriffs des Anspruchs 1 bekannt sind, ist eine Vorrichtung zum Schneiden und Stanzen von Etiketten beschrieben, bei welcher ein Etikettenband über einen Tisch bis zu einem Messer und einem Stanzelement geführt wird, durch welche Etiketten vom Band geschnitten und Aussparungen in die Etiketten gestanzt werden. Jedoch ist es nicht möglich das Etikettenband bzw. die Etiketten zumindest beim Schneide-und/oder Stanzvorgang beispielsweise an der Auflagefläche zu justieren bzw. zu befestigen, um ein Verrutschen der Etiketten zu verhindern.

Der vorliegenden Erfindung liegt daher die Aufgabe zugrunde, eine Vorrichtung zur Verfügung zu stellen, welche ein Präparieren von zu verbindenden Kunststoffschläuchen zum einfachen Verbinden der genannten Endabschnitte erlaubt.

Dies wird erfindungsgemäß durch eine Präparierungseinheit zum Präparieren von zu verbindenden Kunststoffschläuchen nach Anspruch 1 erreicht. Vorteilhafte Ausführungsformen und Weiterbildungen sind Gegenstand der Unteransprüche. Es wird dabei darauf hingewiesen, dass sowohl die erfindungsgemäße Vorrichtung als auch die Anlage die Präparierungseinheit dem gleichen erfinderischen Zweck bzw. der gleichen erfinderischen Aufgabe dienen.

Eine Vorrichtung zum Verbinden von Kunststoffschläuchen weist eine Ablagefläche auf, auf der ein Endabschnitt eines ersten Kunststoffschlauches abgelegt wird. Weiterhin weist die Vorrichtung eine Befestigungsfläche auf, um einen Bereich dieses Endabschnitts des Kunststoffschlauches zeitweise an der Vorrichtung zu befestigen. Erfindungsgemäß ist oberhalb der Ablagefläche ein bewegbarer Behandlungskörper zur Behandlung des Endabschnitts des Kunststoffschlauches vorgesehen, wobei dieser Behandlungskörper sowohl in einer Längsrichtung des Kunststoffschlauches als in einer senkrecht zu der Ablagefläche stehenden Richtung gegenüber der Ablagefläche bewegbar ist.

Unter einem Behandlungskörper wird ein Körper verstanden, der auf einen weiteren Körper, hier den Kunststoffschlauch bzw. dessen Endabschnitt, einwirkt. Vorzugsweise ist dieser Behandlungskörper zwischen wenigstens zwei Stellungen bezüglich der Ablagefläche bewegbar, wobei der Behandlungskörper in einer ersten Stellung in einer Transportrichtung des Kunsstoffschlauches zumindest teilweise und bevorzugt vollumfänglich vor der Befestigungsfläche angeordnet ist und besonders bevorzugt ausgehend von dieser Stellung in Richtung der Befestigungsfläche verschiebbar ist. Vorzugsweise kann der Behandlungskörper in einer zweiten Stellung gegenüber der Ablagefläche im Wesentlichen wenigstens teilweise und bevorzugt vollständig oberhalb der Befestigungsfläche angeordnet werden.

Vor dem Verbindungsvorgang zweier Endabschnitte wird bevorzugt der erste Endabschnitt in zwei Bereiche aufgetrennt, wobei ein erster Bereich durch die Befestigungsfläche gehalten wird und ein zweiter Bereich gegenüber dem ersten Bereich abgeknickt wird. Während des Verbindungsvorganges wird der zweite mit dem ersten Endabschnitt zu verbindende Endabschnitt in einen Zwischenraum zwischen den beiden Bereichen eingeführt. Zu diesem Zeitpunkt ist der Behandlungskörper in der Transportrichtung des Kunststoffschlauches vor dem Endabschnitt bzw. auch den beiden Bereichen angeordnet, um das Einführen des zweiten Endabschnitts nicht zu behindern.

Nach dem Einführen des zweiten Endabschnitts wird der Behandlungskörper sowohl in der Transportrichtung des Kunststoffschlauches als auch bevorzugt auf die bereits zusammengeführten Endabschnitte beider Kunststoffschläuche zu geführt, um die Verbindung dieser Endabschnitte zu verfestigen.

Vorzugsweise ist der Behandlungskörper an der Vorrichtung angeordnet, es wäre jedoch auch möglich, dass der Behandlungskörper an einer Anlage angeordnet wird und die Vorrichtung gegenüber dieser Anlage bewegt wird.

Unter einer Befestigungsfläche wird eine Fläche bzw. ein Flächenabschnitt verstanden, der durch bestimmte Mittel den Endabschnitt oder einen Teil dieses Endabschnitts vorübergehend festhält. Vorzugsweise handelt es sich dabei um eine Saugleiste, die diesen entsprechenden Endabschnitt anzieht. Es könnten jedoch auch elektrostatische Haltemittel oder dergleichen vorgesehen sein.

Dabei bewirkt diese Befestigungsfläche, dass der Endabschnitt wenigstens vor und während dem eigentlichen Verbindungsvorgang gehalten wird. Nach Fertigstellung der Verbindung wird der betreffende Endabschnitt oder ein Bereich dieses Endabschnitts wieder freigegeben. Vorzugsweise handelt es sich bei dem Kunststoffschlauch um einen abgeflachten Schlauch d. h. einen Schlauch, der im Wesentlichen zwei zueinander parallele Flächen und zwei links- und rechtsseitige Kanten diesbezüglich aufweist. Im Bereich des Endabschnittes wird die obere Fläche von der unteren Fläche getrennt, d. h. insbesondere werden diese beiden Kanten aufgetrennt.

Der erste Bereich liegt anschließend an der Befestigungsfläche an und der zweite Bereich wird beispielsweise durch eine unten noch im Detail zu erläuternde Haltestange beispielsweise in einer abgeknickten Stellung gegenüber dem ersten Bereich gehalten. An dem Behandlungskörper kann einerseits einer der beiden Bereiche vor dem eigentlichen Verbindungsvorgang anliegen und andererseits bewirkt der Behandlungskörper anschließend, dass die beiden Bereiche aneinandergepresst werden. Um den Endabschnitt besonders günstig für die Verbindung vorbereiten zu können, ist erfindungsgemäß der Behandlungskörper einerseits senkrecht zu der Ablagefläche bewegbar damit er hochgehoben werden kann und andererseits auch in der Längsrichtung des Kunststoffschlauches bewegbar um den Verbindungsvorgang zu unterstützen. Unter der Längsrichtung des Kunststoffschlauches wird die Richtung verstanden, in der sich der Kunststoffschlauch im Wesentlichen erstreckt. Dies ist dabei bevorzugt auch die Transportrichtung, entlang derer der Kunststoffschlauch transportiert wird. Vorzugsweise ist der Behandlungskörper ein langgestreckter Körper, der sich senkrecht zu einer Ebene erstreckt, die durch die Längsrichtung die senkrecht zu der Ablagefläche verlaufende Richtung aufgespannt wird.

Vorzugsweise weist der Behandlungskörper wenigstens eine Rolle auf, die um eine Drehachse drehbar ist, welche senkrecht zu einer Ebene steht, welche durch die Transportrichtung und die zur Ablagefläche stehende Richtung aufgespannt wird. Damit erstreckt sich bevorzugt diese Rolle von einer Längskante des Kunststoffschlauches zu der anderen Längskante. Der Vorteil einer Ausführung als Rolle liegt darin, dass nach dem Verbinden der Endabschnitte dieser rollenförmige Behandlungskörper zum Verfestigen der Verbindung über den Verbindungsabschnitt gerollt werden kann.

Vorzugsweise ist der Behandlungskörper schwenkbar um eine vorgegebene Schwenkachse an der Vorrichtung angeordnet. Vorteilhaft ist ein Ausleger vorgesehen, der an einem Ende schwenkbar an der Vorrichtung angeordnet ist und der an seinem zweiten Ende den Behandlungskörper bzw, die Drehachse dieses Behandlungskörpers aufweist. Durch diese Schwenkbewegung wird insbesondere auch eine Bewegung des Behandlungskörpers in der zu der Ablagefläche senkrechtstehenden Richtung erreicht.

Weiterhin ist der Behandlungskörper auch verschiebbar in der Längsrichtung des Kunststoffschlauches gegenüber der Ablagefläche angeordnet. Zu diesem Zweck kann ein Schlitten vorgesehen sein, der sich in der Längsrichtung des Kunststoffschlauches bzw. auch in der Längsrichtung der Ablagefläche erstreckt, und entlang dessen die Rolle verschoben werden kann. Damit ist besonders bevorzugt die Trenneinrichtung sowohl schwenkbar als auch verschiebbar gegenüber der Ablagefläche angeordnet. Die Verschiebbarkeit dient, wie oben gesagt, zum Verfestigen des Verbindungsbereichs nach dem Herstellen der Verbindung zwischen den Endabschnitten.

Bei einer weiteren bevorzugten Ausführungsform weist die Vorrichtung eine Haltestange auf, die parallel zu dem Behandlungskörper angeordnet ist. Dabei ist es möglich, dass während des Verbindungsvorganges, der, wie unten ausgeführt, automatisch durchgeführt wird, der umgeknickte Bereich des Endabschnitts durch diese Haltestange gehindert wird, sich auf den ersten Bereich, der durch die Befestigungsfläche gehalten wird, zuzubewegen. Vorzugsweise ist damit diese Haltestange wenigstens zeitweise zwischen dem ersten Bereich des Endabschnitts und dem zweiten Bereich des Endabschnitts vorgesehen. Vorzugsweise ist diese Haltestange in einer Nut versetzbar, wobei die Nut derart ausgeführt ist, dass die Haltestange dennoch in einer vorgegebenen Endposition festgesetzt werden kann.

Bei einer weiteren vorteilhaften Ausführungsform sind an der Ablagefläche wenigstens zwei Positionierungsstifte vorgesehen, welche in einer senkrecht zu der Ablagefläche zu stehenden Richtung verschiebbar sind. Diese Positionierungsstifte können während des Verbindungsvorganges durch entsprechende Löcher bzw. Öffnungen, die bereits vorher in dem Kunststoffschlauch angebracht wurden, hindurch treten und gewährleisten damit eine genaue geometrische Fixierung des Kunststoffschlauches gegenüber der Ablagefläche. Zur Betätigung dieser beiden Positionierungsstifte können insbesondere aber nicht ausschließlich pneumatische, mechanische oder magnetische Antriebe vorgesehen sein.

Bei einer weiteren vorteilhaften Ausführungsform sind Arretierungsmittel vorgesehen, welche den Behandlungskörper in einer vorbestimmten Position gegenüber der Befestigungsfläche bzw. auch gegenüber der Ablagefläche arretieren.

Die vorliegende Erfindung ist weiterhin auf eine Verwendungzusammen mit einer Anlage zum Verbinden von Kunststoffschläuchen mit wenigstens einer Vorrichtung der oben beschriebenen Art gerichtet. Daneben weist diese Anlage eine Heranführungseinrichtung auf, welche ein mit dem Endabschnitt des Kunststoffschlauches zu verbindenden Endabschnitt eines weiteren Kunststoffschlauches an diesen Kunststoffschlauch heranführt. Bei diesem weiteren Kunststoffschlauch handelt es sich vorzugsweise um den Endabschnitt der gerade vollständig abgerollten Rolle. Dieser Endabschnitt wird mit einem Anfangsabschnitt der nächsten Rolle verbunden.

Vorzugsweise weist die Anlage mehrere Vorrichtungen der oben beschriebenen Art auf und die Heranführungseinrichtung kann zwischen diesen Vorrichtungen bewegt werden. Vorzugsweise ist dabei diese Heranführungseinrichtung in einer senkrecht zu der Transportrichtung stehenden Richtung bewegbar und kann auf diese Weise an jede einzelne der oben genannten Vorrichtungen herangeführt werden. Die gesamte Anlage weist weiterhin ein Rollenmagazin auf, in dem eine Vielzahl von Rollen vorgesehen ist, welche mit den Kunststoffschläuchen versehen sind. Im Gegensatz zum Stand der Technik ist nicht bei jedem Rollenwechsel ein manuelles Eingreifen des Benutzers erforderlich sondern dieser muss nur zu Beginn des Prozesses eine bestimmte Anzahl von Endabschnitten vorbereiten und der eigentliche Verbindungsprozess wird anschließend automatisch vorgenommen.

Vorzugsweise weist die Heranführungseinrichtung einen Antrieb auf, der zum Verschieben der Heranführungseinrichtung den einzelnen erfindungsgemäßen Vorrichtungen dient. Besonders vorteilhaft sind die erfindungsgemäßen Vorrichtungen selbst antriebsfrei ausgeführt. Auf diese Weise kann in besonders rationaler Weise mit besonders wenigen Antrieben der Verbindungsprozess durchgeführt werden.

Es wird darauf hingewiesen, dass im Rahmen der vorliegenden Beschreibung der Behandlungskörper direkt an der oben genannten Vorrichtung vorgesehen ist. Es wäre jedoch auch möglich, dass die Vorrichtung ohne den Behandlungskörper ausgeführt wird und anstelle dessen ein entsprechender Behandlungskörper an der Heranführungseinrichtung vorhanden ist.

Bei einer weiteren vorteilhaften Ausführungsform weist die Anlage eine Sensoreinrichtung auf, welche eine geometrische Position des Endabschnitts des Kunststoffschlauches erfasst. Vorzugsweise handelt es sich dabei um einen optischen Sensor, der eine Position senkrecht zur Transportrichtung des Kunststoffschlauches erfasst. Dieser optische Sensor kann dabei an jeder der oben genannten Vorrichtungen angeordnet sein, besonders bevorzugt befindet er sich jedoch an der Heranführungseinrichtung. Vorteilhaft weist die Anlage auch eine Steuereinrichtung auf, die in Reaktion auf eine durch den Sensor festgestellte Position die Bewegung der Heranführungseinrichtung steuert. Auf diese Weise ist eine besonders präzise Ausrichtung der jeweiligen Endabschnitte der Kunststoffschläuche zueinander möglich.

Bei einer weiteren vorteilhaften Ausführungsform weist die Heranführungseinrichtung eine Antriebsrichtung auf, welche den Behandlungskörper gegenüber der Ablagefläche bewegt. Wie oben erwähnt, ist die Vorrichtung zum Verbinden der Endabschnitt besonders bevorzugt antriebsfrei und ein entsprechender Antrieb befindet sich in der Heranführungseinrichtung. Auf diese Weise können Kosten eingespart werden.

Die vorliegende Erfindung ist auf eine Präparierungseinheit zum Präparieren von zu verbindenden Kunststoffschläuchen gerichtet. Diese Präparierungseinheit weist eine Analagefläche auf, auf deren Endabschnitt eines Kunststoffschlauches angelegt werden kann. Weiterhin sind Befestigungsmittel vorgesehen, um den Endabschnitt wenigstens zeitweise befestigen, wobei diese Befestigungsmittel vorzugsweise mit einer Schneideinrichtung zum Abschneiden der Kunststoffschläuche gekoppelt sind. Erfindungsgemäß weist die Präparierungseinheit Stanzmittel auf, welche in die Kunststoffschläuche Löcher einbringen und diese Stanzmittel sind derart mit dem Betätigungselement gekoppelt, dass bei einer vorgegebenen Betetätigung des Betätigungselementes sowohl ein Schneidevorgang als auch ein Stanzvorgang durchgeführt wird.

Durch diese Koppelung wird in besonders einfacher Weise erreicht, dass einerseits der Endabschnitt des Kunststoffschlauches an einer bestimmten Stelle geschnitten wird und andererseits auch die beiden Löcher erzeugt werden, die später für die Positionierungsstifte der oben beschriebenen Vorrichtung und damit zur Positionierung des Kunststoffschlauches gegenüber dieser Vorrichtung dienen. Erfindungsgemäß weist das Stanzmittel zwei voneinander beabstandete Stifte auf, wobei der Abstand der voneinander beabstandeter Stifte veränderbar ist. Auf diese Weise kann die Präparierungseinheit auch auf unterschiedliche Breiten der jeweiligen Kunststoffschläuche angepasst werden.

Die vorliegende Erfindung ist weiterhin auf die Verwendung mit einem Verfahren zum Verbindung von Kunststoffschläuchen gerichtet, wobei in einem ersten Schritt ein Endabschnitt eines ersten Kunststoffschlauches präpariert und dieser Endabschnitt auf einer Vorrichtung zum Verbinden von Kunststoffschläuchen abgelegt wird. In einem weiteren Verfahrensschritt wird ein Endabschnitt eines zweiten Kunststoffschlauches an den Endabschnitt des ersten Kunststoffschlauches herangeführt und in einem weiteren Verfahrensschritt der Endabschnitt des ersten Kunststoffschlauches mit dem Endabschnitt des zweiten Kunststoffschlauches an einem vorgegebenen Verbindungsabschnitt verbunden.

Der Endabschnitt des ersten Kunststoffschlauches wird wenigstens zeitweise gegenüber der Vorrichtung befestigt, wobei ein oberhalb der Ablagefläche vorgesehener Behandlungskörper während des Verbindens gegenüber der Ablagefläche sowohl in einer Längsrichtung des Kunststoffschlauches als auch in einer senkrecht zu der Ablagefläche stehenden Richtung bewegt wird.

Vorteilhaft wird der erste Endabschnitt des ersten Kunststoffschlauches mit einem selbstklebenden Material bestückt. Genauer gesagt werden die beiden voneinander getrennten Bereiche des Endabschnitts gegebenenfalls mit einem selbstklebenden Material versehen und zur Verbindung an den zu verbindenden Endabschnitt des zweiten Kunststoffschlauches angepresst.

Vorzugsweise wird nach dem Verbinden der Endabschnitte der Behandlungskörper über einen Verbindungsabschnitt bewegt. Auf diese Weise wird, wie oben bereits dargelegt, die Verbindung weiter verfestigt.

Vorteilhaft wird der Endabschnitt mit einer Präparierungseinheit der oben beschriebenen Art präpariert. Vorteilhaft werden weiterhin die Endabschnitte mit einer Vorrichtung der oben beschriebenen Art verbunden.

Weitere Vorteile und Ausführungsform ergeben sich aus den beigefügten Zeichnungen:

Fig 1a - 4b zeigen Vorrichtungen, für die Kein Schutz beanspruncht wird, die jedoch mit der erfindungsgemäßen Präparierungseinheit verwendet werden können. Die Figuren zeigen:
- Fig. 1a: eine perspektivische Ansicht einer Vorrichtung zum Verbinden von Kunststoffschläuchen;
- Fig. 1b: eine Querschnittsansicht einer in Fig. 1a gezeigten Vorrichtung;
- Fig. 2a: eine perspektivische Ansicht einer Heranführungseinrichtung zum Verbinden von Kunststoffschläuchen ohne die Vorrichtung aus Fig. 1a;
- Fig. 2b: die Heranführungseinrichtung aus Fig. 2a mit einer Vorrichtung gemäß Fig. 1a;
- Fig. 3a: eine Seitenansicht der in Fig. 2a gezeigten Darstellung;
- Fig. 3b: eine Seitenansicht der in Fig. 2b gezeigten Darstellung;
- Fig. 4a: eine erste Ansicht einer Sensoreinrichtung für die Anlage aus Fig. 3a;
- Fig. 4b: eine perspektivische Ansicht der Sensoreinrichtung aus Fig. 4a;
- Fig. 5a: eine erste Ansicht einer erfindungsgemäßen Präparierungseinheit, und
- Fig. 5b: eine weitere Ansicht der Präparierungseinheit auf Fig. 5a.

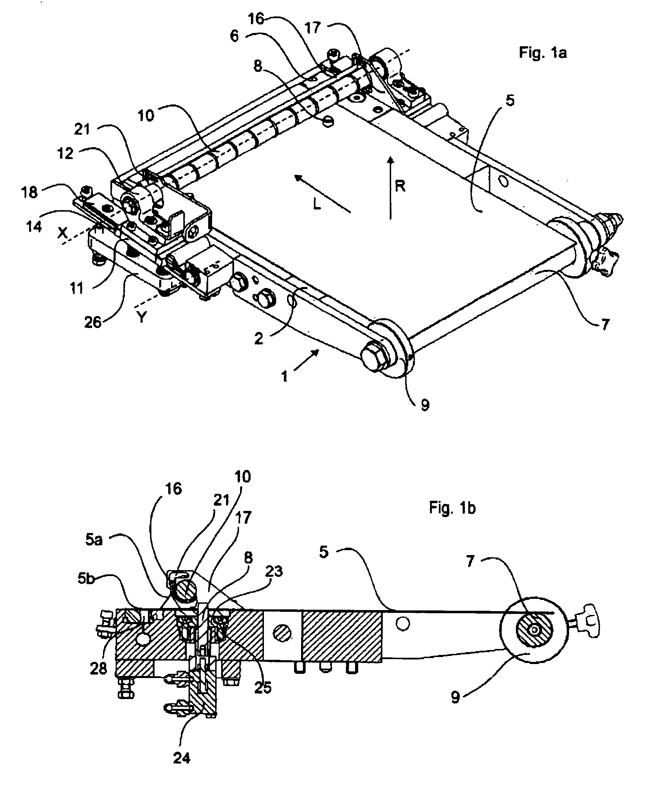

Fig. 1 zeigt eine Vorrichtung zum Verbinden von Kunststoffschläuchen. Dabei bezieht sich das Bezugszeichen 2 auf eine zum größten Teil verdeckte Ablagefläche, auf der ein nur abschnittsweise gezeigter Kunststoffschlauch 5 aufliegt. In der Anwendung endet der Kunststoffschlauch nicht mit der gezeigten Kante, sondern führt weiter zu einem Rollenmagazin und insbesondere zu einer Rolle, auf der der Kunststoffschlauch aufgewickelt ist. Der Kunststoffschlauch 5 wird diesem Zweck über eine Umlenkrolle 7 gelenkt. Das Bezugszeichen 9 bezieht sich auf Seitenscheiben, welche zum Ausrichten des Kunststoffschlauchs gegenüber der Vorrichtung 1 dienen.

Im vorderen Bereich der Vorrichtung befindet sich eine (ebenfalls größtenteils verdeckte) Befestigungsfläche 6, die zum vorübergehenden Befestigen des Kunststoffschlauches 5 dient. Dabei handelt es sich vorzugsweise um eine Saugleiste, die durch einen Unterdruck einen Endbereich des Kunststoffschlauchs 5 anzieht. Das Bezugszeichen L bezieht sich auf eine Längsrichtung des Kunststoffschlauches und gleichzeitig auch auf diejenige Richtung, entlang derer der Kunststoffschlauch im Betrieb transportiert wird. Das Bezugszeichen R kennzeichnet eine senkrecht zu der Ablagefläche 2 stehende Richtung.

Zum genauen Positionieren des Kunststoffschlauches 5 dienen Positionierungsstifte 8, die durch bereits vorab durch den Kunststoffschlauch 5 gestanzte Löcher hindurchtreten und ihn auf diese Weise positionieren.

Das Bezugszeichen 10 zeigt einen Behandlungskörper, der hier als Rolle bzw. Walze ausgeführt ist, wobei diese Rolle bzw. Walze 10 bevorzugt aus einem Gummimaterial besteht. Parallel zu dem Behandlungskörper 10 ist eine Haltestange 16 vorgesehen, die in Fig. 1 teilweise durch den Behandlungskörper 10 verdeckt ist. Diese Haltestange 16 dient zum Einfädeln eines Endabschnittes des Kunststoffschlauches bzw. dazu, den Endabschnitt wenigstens zeitweise in Richtung des Behandlungskörpers 10 räumlich in zwei Bereiche 5a, 5b zu trennen. Zu diesem Zweck ist die Haltestange 16 bzw. sind die Endabschnitte der Haltestange 16 in einer abgewinkelten Nut 21 geführt. Diese Nuten 21 wiederum sind an einem Halteblech 17 angeordnet, welches gleichzeitig auch als Arretierungsmittel für den Behandlungskörper 10 dient.

Das Bezugszeichen 12 zeigt eine Lagerung für den Behandlungskörper bzw. dessen Endabschnitte, wobei diese Lagerung auch, wie untern erläutert wird, geeignet ist, um von einem entsprechenden Maschinenelement einer Anlage zum Verbinden von Kunststoffschläuchen geführt zu werden. Weiterhin ist der Behandlungskörper 10 über einen Ausleger 11 schwenkbar gegenüber einer Schwenkachse Y und damit auch gegenüber der Ablagefläche 2 angeordnet. Es wird dabei darauf hingewiesen, dass bei der in Fig. 1 gezeigten Ausführungsform der Behandlungskörper 10 letztlich auch an der Vorrichtung 1 angeordnet ist. Es wäre jedoch auch möglich, den Behandlungskörper 10 nicht an der Vorrichtung 1 selbst anzuordnen, sondern an einem weiteren Element der Anlage zum Verbindung von Kunststoffschläuchen. Das Bezugszeichen 14 bezieht sich auf einen Schlitten, der gegenüber einem Träger 18 verschiebbar ist. Auf diese Weise kann auch eine Bewegung des Behandlungskörpers 10 in der Längsrichtung L ausgeführt werden. Das Bezugszeichen 26 bezieht sich auf einen Befestigungskörper, mit dem die Vorrichtung 1 an einer senkrecht zu der Längsrichtung L verlaufenden Schiene (nicht gezeigt) befestigt werden kann. Der Behandlungskörper 10 ist dabei drehbar um eine Drehachse X, die ebenfalls senkrecht zu der Längsrichtung L steht, angeordnet.

Fig. 1b zeigt eine Querschnittsansicht der in Fig. 1a gezeigten Vorrichtung. Man erkennt hier, dass der Kunststoffschlauch 5 bzw. der betreffende Endabschnitt 5 des Kunststoffschlauches an seinem Ende bereits in einen Bereich 5b und einen Bereich 5a aufgetrennt wurde. Der Bereich 5b wird dabei durch die Befestigungseinrichtung 6 (Fig. 1) angezogen und der Bereich 5a zwischen dem Behandlungskörper 10 der Haltestange 16 eingefügt und dort gehalten. Zu diesem Zweck ist die Haltestange 16 in der Winkelnut 21 an ihrer unteren Position angeordnet.

Zum Verbinden wird sowohl auf den Bereich 5a als auch auf den Bereich 5b des Kunststoffschlauches ein Klebemittel wie beispielsweise ein doppelseitiges Klebeband aufgebracht. Das Bezugszeichen 28 zeigt eine Öffnung, die Bestandteil der Saugleiste 6 ist. Das Bezugszeichen 8 bezieht sich wiederum auf den Positionierungsstift, der mittels einer Pneumatikeinrichtung 24 gehoben und gesenkt werden kann. Dabei ist die Ansteuerung dieser Pneumatikeinrichtung 24 auf weitere Elemente der gesamten Anlage synchronisiert. Das Bezugszeichen 23 bezieht sich auf eine Verschiebeeinrichtung, mit der der Positionierungsstift 8 einschließlich der Pneumatikeinrichtung 24 in einer senkrecht zu der Figurenebene stehenden Richtung verschoben werden kann. Das Bezugszeichen 25 bezieht sich auf Befestigungsmittel wie Schrauben, welche den Positionierungsstift in einer bestimmten Stellung festsetzten.

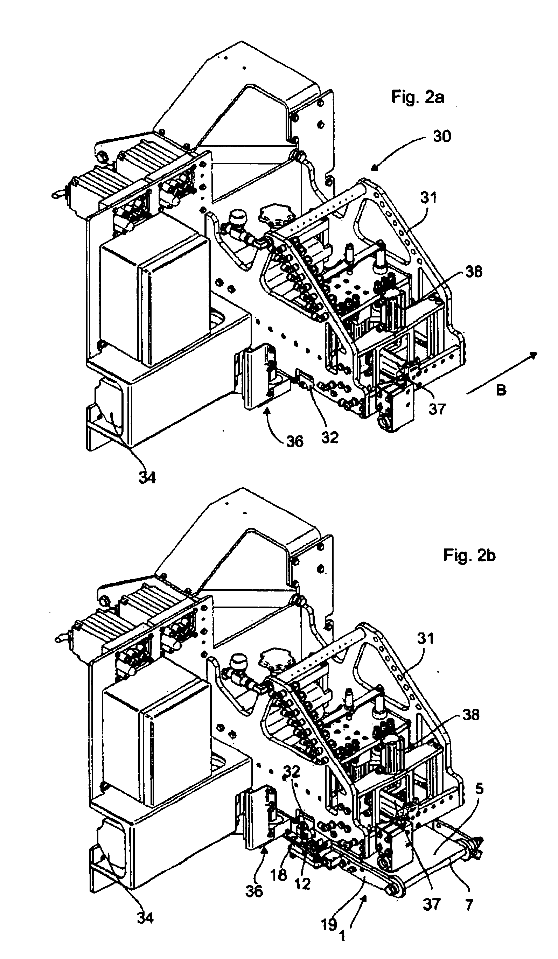

Fig. 2a zeigt eine Heranführungseinrichtung 30 zum Verbinden von Kunststoffschläuchen bzw. die in Fig. 2a gezeigte Heranführungseinrichtung wird im Betrieb in der Bewegungsrichtung B zwischen einzelnen Vorrichtungen 1 (vgl. Fig. la) verschoben, bei der diese Bewegungsrichtung B mit der oben gezeigten Richtung der Drehachse X übereinstimmt. Dabei sind an einem Gestell 31 mehrere Pneumatikzylinder 37, 38 angeordnet, sowie auch eine Sensoreinrichtung 36, welche zur Positionsbestimmung des Kunststoffschlauches und damit zu einer genauen Ausrichtung der Heranführungseinrichtung 30 dient. Das Bezugszeichen 34 kennzeichnet eine Antriebseinrichtung wie einen Motor, welche in Betrieb den Kunststoffschlauch transportiert bzw. fördert. Mit Hilfe einer Klammer 32 wird, wie unten genauer erklärt wird, die Lagerung 12 gegriffen und entsprechend den einzelnen Verfahrensschritten verschoben.

Fig. 2b zeigt die Anlage aus Fig. 2a, wobei in dieser Position auch die Vorrichtung 1 dargestellt ist. Man erkennt hier, dass die Klammer 32 in der Lage ist, die Lagerung 12 zu greifen. Das Bezugszeichen 19 bezieht sich auf einen Rahmen der Vorrichtung 1.

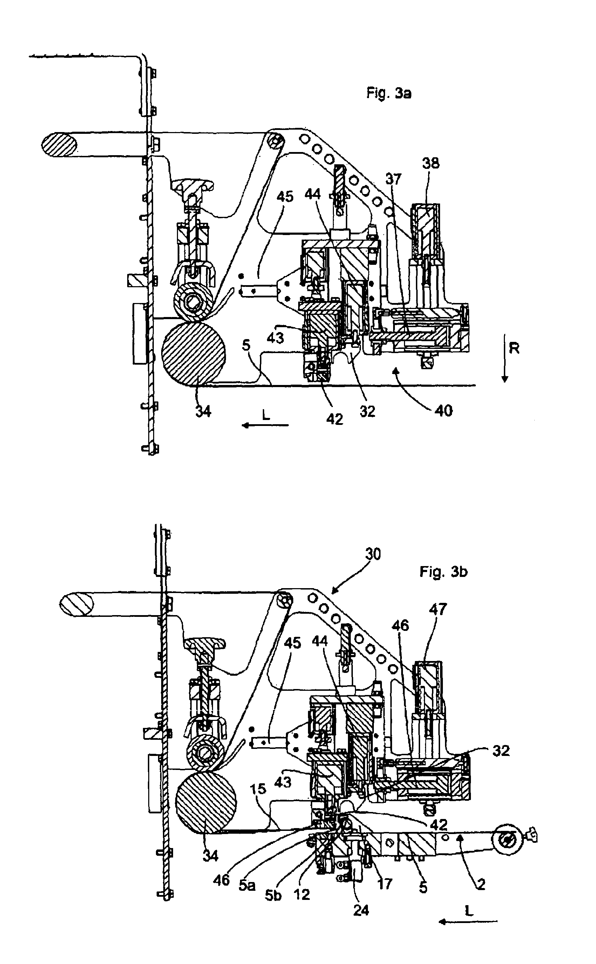

Fig. 3a zeigt eine Querschnittsansicht der in Fig. 2a gezeigten Vorrichtung, wobei hier die erfindungsgemäße Vorrichtung 1 nicht vorhanden ist. Das Bezugszeichen 37 bezieht sich auf eine Pneumatikanordnung für eine Horizontalverschiebung des gesamten Verbindungsmechanismus sich gegenüber einem Träger 45. Das Bezugszeichen 44 zeigt eine weitere Pneumatikeinheit, mit der die Klammer 32 in vertikaler Richtung d. h. der Richtung R verschoben werden kann. Bei dieser Vertikalbewegung wird, wie oben erwähnt, die Lagerung 12 der Vorrichtung 1 gegriffen und damit kann auch der Behandlungskörper 10 sowohl in vertikaler Richtung als auch in Längsrichtung L bewegt werden. Bei einer Antriebswelle 34 wird der Kunststoffschlauch 5 im Betrieb fortbewegt.

Fig. 3b zeigt eine Ansicht der Anlage aus Fig. 3a wobei hier auch die Vorrichtung 1 eingeschoben ist. Man erkennt hier, dass der Endabschnitt des Kunststoffschlauches 5 mit einem entsprechenden Endabschnitt eines weiteren Kunststoffschlauches 15 verbunden werden soll. Zu diesem Zweck wird zunächst die Heranführungseinrichtung 30 senkrecht zu der Figurenebene so verschoben, dass die beiden Endabschnitt 5 und 15 genau gegeneinander positioniert sind. Um dies zu erreichen dient, wie oben erwähnt, eine Sensoreinrichtung, die die Position des Kunststoffschlauches 15 bzw. 5 in der senkrecht zu der Figurenebene stehenden Richtung bestimmt. Anschließend wird mit dem Stempel 42 der Endabschnitt 15 auf den Bereich 5b des Kunststoffschlauches 5 gedrückt.

An dem Stempel 42 ist eine weitere Befestigungseinrichtung 46, wie eine Saugleiste, vorgesehen. In einem weiteren Verfahrensschritt wird mit Hilfe der Klammer 32 die Lagerung 12 und damit auch der Behandlungskörper 10 herabgedrückt und anschließend mit einer Horizontalbewegung entlang der Richtung L auch der Bereich 5a des Kunststoffschlauchs 5 über den anderen Endabschnitt des weiteren Kunststoffschlauches 15 gelegt. Bei den verwendeten doppelseitigen Klebebändern wird auf diese Weise eine Verbindung zwischen den beiden Kunststoffschläuchen 5 und 15 hergestellt. Um die Verbindung zu verbessern, wird der Behandlungskörper 10 über Verbindungsstelle zwischen den beiden Kunststoffschläuchen 5, 15 gerollt und auf diese Weise die Verbindung fixiert. Anschließend wird wiederum der Behandlungskörper 10 freigegeben, indem die Klammer 32 abgezogen wird. Bevorzugt weist daher die Vorrichtung 1 eine (nicht gezeigte) Federungseinrichtung auf, welche Behandlungskörper in der Richtung R weg von der Ablagefläche 2 der Vorrichtung 1 vorspannt.

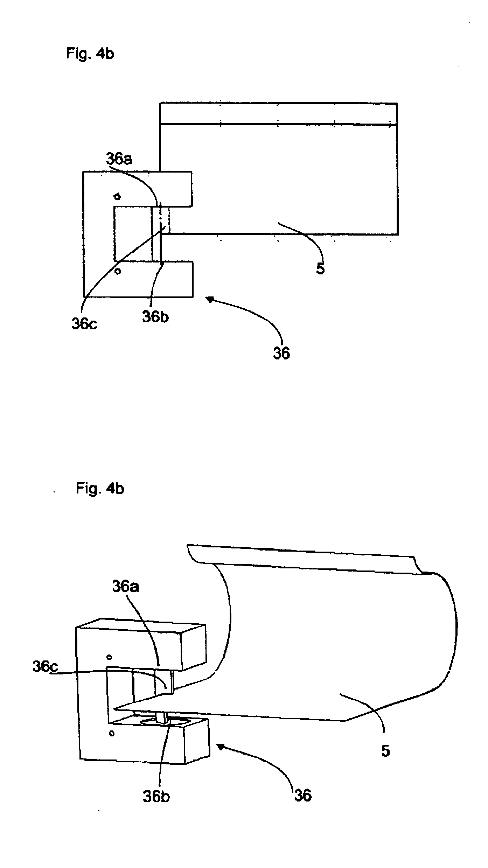

Fig. 4a zeigt schematisch eine Sensoreinrichtung 36, die an der Heranführungseinrichtung 30 angeordnet ist und dazu dient, um die genaue Position des Kunststoffschlauches 15 zu bestimmen. Bei dieser Sensoreinrichtung 36 handelt es sich hier um eine optische Sensoreinrichtung 36. Ausgehend von einer Aussendeeinrichtung 36a wird der Strahl 36c in Richtung eines Empfängers bzw. Detektors 36b geschickt. Falls nun der Kunststoffschlauch 15 an einer vorgegebenen Position gegenüber der Sensoreinrichtung ist kann dies durch den auf dem Empfänger 36 b auftreffenden Strahl ermittelt werden.

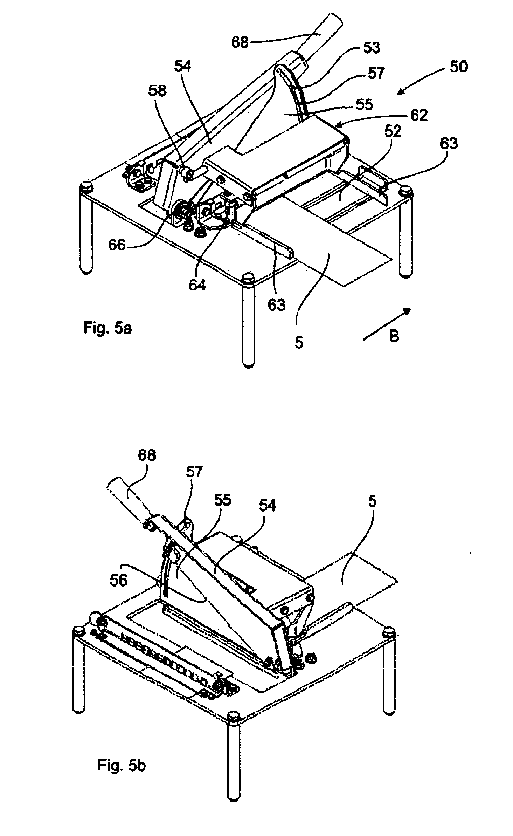

Fig. 4b zeigt eine perspektivische Ansicht der Sensoreinrichtung. Das auf von dem Empfänger 36b ausgegebene Signal hängt davon ab, welcher Anteil des Strahls 36c durch den Kunststoffschlauch 15 verdeckt wird. Auf diese Weise ist eine sehr exakte Positionierung des Kunststoffschlauches 15 gegenüber dem (nicht gezeigten) Kunststoffschlauch 5 möglich. Fig. 5a zeigt eine erste Ansicht einer erfindungsgemäßen Präparierungseinheit 50 zum Vorbereiten eines Endabschnitts eines Kunststoffschlauchs 5. Diese Präparierungseinheit 50 weist eine Ablage 52 auf, auf der der Endabschnitt des Kunststoffschlauchs 5 abgelegt wird. Weiterhin ist ein Betätigungselement 54 in Form eines Hebels mit einen daran angeordneten Griff 68 vorgesehen. Durch eine Betätigung dieses Betätigungselementes wird sowohl ein Schneidvorgang als auch ein Stanzvorgang ausgelöst. Dabei ist an dem Betätigungselement 54 ein Vorsprung bzw. ein Bolzen 53 angeordnet, der in einer Nut 57 einer Befestigungsscheibe 55 angeordnet ist. Bevorzugt dient diese Befestigungsscheibe 55 auch dazu, um den Kunststoffschlauch 5 zeitweise während des Betätigensvorgangs gegenüber der Ablagefläche 52 zu befestigen. Das Bezugszeichen 62 bezieht sich in seiner Gesamtheit auf ein Stanzmittel, um neben dem eigentlichen Schneidvorgang und gleichzeitig auch Löcher in den Kunststoffschlauch 5 zu stanzen. Dabei ist an dem Betätigungselement 54 ein weiterer Bolzen 58 vorgesehen, der bei einer Betätigung des Betätigungselements gleichzeitig auch das Stanzmittel 62 bewegt. Das Betätigungselement 54 ist schwenkbar gegenüber einer Schwenkachse 66 angeordnet. Das Bezugszeichen 63 bezieht sich auf Kanten, welche zur Positionierung des Kunststoffschlauches dienen. Wenigstens eine dieser Kanten 63 ist in der Richtung B verstellbar. Das Bezugzeichen 64 bezieht sich auf einen Stift, der im Rahmen des eigentlichen Stanzvorgangs durch die Kunststofffolie hindurchgedrückt wird. Auch die Position diese Stiftes 64 ist in der Richtung B verstellbar.

Fig. 5b zeigt eine weitere Ansicht der in Fig. 5a gezeigten Präparierungseinheit. Dabei bezieht sich das Bezugzeichen 56 auf ein Schneidelement bzw. eine Schneidkante, welche zum Abschneiden des Kunststoffschlauches 5 dient.

## Patentansprüche

1. Präparierungseinheit (50) zum Präparieren von zu verbindenden Kunststoffschläuchen, mit einer Anlagefläche (52), auf der ein Endabschnitt eines Kunststoffschlauches (5) angelegt werden kann, mit einem Betätigungselement (54) das mit einer Schneideeinrichtung (56) zum Abschneiden der Kunststoffschläuche gekoppelt ist, wobei
die Präparierungseinheit (50) Stanzmittel (62) aufweist, welche in die Kunststoffschläuche Löcher einbringen und diese Stanzmitttel (62) derart mit dem Betätigungselement (54) gekoppelt sind, dass bei einer vorgegebenen Betätigung des Betätigungselements (54) sowohl ein Schneidevorgang als auch ein Stanzvorgang durchgeführt wird,
**dadurch gekennzeichnet, dass**
die Präparierungseinheit (50) Befestigungsmitteln aufweist, um den Endabschnitt wenigstens zeitweise und gegenüber der Anlagefläche (52) zu befestigen und wobei das Stanzmittel (62) zwei voneinander beabstandete Stifte (64) aufweist, wobei ein Abstand der zwei voneinander beabstandeten Stifte (64) veränderbar ist.

2. Präparierungseinheit (50) nach einem der vorangegangenen Ansprüche, **dadurch gekennzeichnet, dass**
das Betätigungselement (54) ein Hebel (54) ist.

3. Präparierungseinheit (50) nach einem der vorangegangenen Ansprüche, **dadurch gekennzeichnet, dass**
das Betätigungselement (54) schwenkbar gegenüber einer Schwenkachse (66) angeordnet ist.

4. Präparierungseinheit (50) nach einem der vorangegangenen Ansprüche, **dadurch gekennzeichnet, dass**
die Präparierungseinheit (50) eine Befestigungsscheibe (55) aufweist, welche zeitweise zum Befestigen des Kunststoffschlauches an der Anlagefläche dient.

5. Präparierungseinheit (50) nach Anspruch 4,
**dadurch gekennzeichnet, dass**
an dem Betätigungselement (54) ein Vorsprung (53) angeordnet ist, der ein einer Nut (57) der Befestigungsscheibe (55) verläuft.

6. Präparierungseinheit (50) nach einem der vorangegangenen Ansprüche, **dadurch gekennzeichnet, dass**
an dem Betätigungselement (54) ein weiterer Bolzen (58) angeordnet ist, der bei einer Betätigung des Betätigungselements (54) gleichzeitig auch das Stanzmittel (62) bewegt.

7. Präparierungseinheit (50) nach einem der vorangegangenen Ansprüche, **dadurch gekennzeichnet, dass**
die Präparierungseinheit (50) Kanten (63) zur Positionierung des Kunststoffschlauches (5) aufweist.

8. Präparierungseinheit (50) nach Anspruch 7,
**dadurch gekennzeichnet, dass**
die Kanten (63) in einer Richtung (B) verstellbar sind.

## Claims

1. Preparation unit (50) for preparing plastic tubes which are to be joined, comprising a depositing surface (52) on which an end section of a plastic tube (5) can be deposited, and comprising an actuation element (54) which is coupled to a cutting device (56) for cutting the plastic tubes, wherein the preparation unit (50) comprises punching means (62) which make holes in the plastic tubes, and these punching means (62) are coupled to the actuation element (54) in such a way that, during a predefined actuation of the actuation element (54), both a cutting operation and a punching operation are carried out **characterised in that**
the preparation unit comprises fixing means for fixing the end section temporarily and relative to the depositing surface (52) and **in that** the punching means (6) comprises two pins (64) which are spaced apart from one another, wherein the distance between the spaced-apart pins (64) is variable.

2. Preparation unit (50) according to claim 12,
**characterised in that**
the actuation element (54) is a lever.

3. Preparation unit (50) according to at least one of the preceding claims,
**characterised in that**
the actuation element (54) is pivotable with respect to pivot axis (66).

4. Preparation unit (50) according to at least one of the preceding claims,
**characterised in that**
the preparation unit (50) comprises a fixing disc (55), which temporarily serves for fixing the depositing surface (52).

5. Preparation unit (50) according to claim 4,
**characterised in that**
at the actuation element (54) a nose is arranged, which runs in a groove (57) of the fixing disc (55).

6. Preparation unit (50) according to at least one of the preceding claims,
**characterised in that**
a further bolt (58) is arranged at the actuation element (54), which in case of a movement of the actuation element (54) also moves the punching means (62).

7. Preparation unit (50) according to at least one of the preceding claims,
**characterised in that**
the preparation unit (50) comprises edges (63) for positioning the plastic tube (5).

8. Preparation unit (50) according to claim 7
**characterised in that**
the edges (63) are displaceable in a direction (B).

## Revendications

1. Unité de préparation (50) pour préparer des tuyaux flexibles plastiques à relier, comportant une surface de pose (52), sur laquelle on peut poser une extrémité d'un tuyau flexible plastique (5), comportant un élément d'actionnement (54) qui est couplé à un dispositif de coupe (56) pour sectionner les tuyaux flexibles plastiques,
ladite unité de préparation (50) comportant des moyens de perforation (62) pour réaliser des trous dans les tuyaux flexibles plastiques, et lesdits moyens de perforation étant couplés avec l'élément d'actionnement (54) de telle sorte que, lors d'un actionnement prédéfini de l'élément d'actionnement (54), sont mis en oeuvre un processus de coupe, de même qu'un processus de perforation,
**caractérisée en ce que**
l'unité de préparation (50) comporte des moyens de fixation pour fixer l'extrémité au moins temporairement et par rapport à la surface de pose (52), et le moyen de perforation (62) comporte deux broches (64) écartées l'une de l'autre, la distance entre les deux broches (64) écartées l'une de l'autre étant variable.

2. Unité de préparation (50) selon la revendication précédente, **caractérisée en ce que** l'élément d'actionnement (54) est un levier (54).

3. Unité de préparation (50) selon l'une quelconque des revendications précédentes, **caractérisée en ce que** l'élément d'actionnement (54) est monté pivotant par rapport à un axe de pivotement (66).

4. Unité de préparation (50) selon l'une quelconque des revendications précédentes, **caractérisée en ce que** l'unité de préparation (50) comporte un disque de fixation (55), qui est utilisé temporairement pour fixer le tuyau flexible plastique sur la surface de pose.

5. Unité de préparation (50) selon la revendication 4, **caractérisée en ce que** sur l'élément d'actionnement (54) est disposée une saillie (53) qui s'étend dans une rainure (57) du disque de fixation (55).

6. Unité de préparation (50) selon l'une quelconque des revendications précédentes, **caractérisée en ce que** sur l'élément d'actionnement (54) est disposé une autre protubérance (58) qui, lors de l'actionnement de l'élément d'actionnement (54), déplace en même temps aussi le moyen de perforation (62).

7. Unité de préparation (50) selon l'une quelconque des revendications précédentes, **caractérisée en ce que** l'unité de préparation (50) comporte des rebords (63) pour positionner le tuyau flexible plastique.

8. Unité de préparation (50) selon la revendication 7, **caractérisée en ce que** les rebords (63) sont réglables dans une direction (B).
